# EUROPEAN PATENT APPLICATION

(11) **EP 3 021 049 A1**
(43) Date of publication of application: **18.05.2016**
(21) Application number: 15193694.5
(22) Date of filing: 09.11.2015
(51) Int. Cl.: F24D 10/00, F24D 19/10

(54) **HEAT INTERFACE UNIT**

(30) Priority: 13.11.2014 GB 201420204
(71) Applicant: R.B.M. S.p.A., 25060 S. Giovanni di Polaveno (BS) (IT)
(72) Inventor: Bossini, Guido, S. Giovanni di Polaveno (BS) (IT)
(74) Representative: Sales, Robert Reginald

(57) **Abstract**

A heat interface unit 10 for a property, the heat interface unit 10 including: a hot water supply inlet 18 from a district heating supply; a return outlet 32 to the district heating supply; a control unit 12; a control valve 22 to control water flow from the district heating supply; a hot water supply arrangement including a first heat exchanger 30 with on a first side an inlet 26 for hot water from the district heating supply and an outlet 32 for water to return to the district heating supply, and on a second side an inlet for cold mains water, and an outlet 46 for water warmed by warm water from the district heating supply, leading to a hot water supply for the property.

## Description

This invention relates to heat interface units, and also heating systems for a plurality of properties including such heat interface units.

Heat interface units are used for instance in dwellings, where heating energy is taken from a common source for a number of dwellings. For instance in a block of flats or similar arrangement with adjacent dwellings, a central boiler or similar may be provided which provides heat energy to a number of dwellings. Each dwelling will have a heat interface unit to provide their hot water supply, and often also their central heating.

The heating energy is generally supplied in the form of hot water, which can pass through one or more heat exchangers in the heat interface units, to heat water for a hot water supply and/or for central heating. Difficulties can be encountered with such systems in efficiently providing rapid required heating of water, bearing in mind that the common hot water supply may vary in temperature and/or pressure for instance due to demand fluctuations. For instance, at certain times of the day such as first thing in the morning, there may be a particularly high demand for hot water and/or heating from a number of the dwellings.

According to a first aspect of the invention there is provided a heat interface unit for a property, the heat interface unit including: a hot water supply inlet from a district heating supply; a return outlet to the district heating supply; a control unit; a valve to control water flow from the district heating supply; a hot water supply arrangement including a first heat exchanger with on a first side an inlet for hot water from the district heating supply and an outlet for water to return to the district heating supply, and on a second side an inlet for cold mains water, and an outlet for water warmed by warm water from the district heating supply, leading to a hot water supply for the property.

The control unit may have proportional integral derivative control, and may include algorithms that allow the modulation speed to also be proportional.

The valve may be a pressure independent control valve, and may have an electric actuator modulating control operatively connected to the control unit.

A flow sensor may be provided in the hot water supply arrangement to detect when water is flowing therethrough and hence there is a demand for hot water. The flow sensor may be provided in the mains water supply to detect water flowing into the first heat exchanger.

A temperature detector may be provided in or adjacent the outlet from the first heat exchanger. The flow sensor and temperature detector may be connected to the control unit, and the heat interface unit may be configured such that the control valve is opened by the control unit to a required amount to provide hot water in the hot water circuit at a required predetermined temperature. The predetermined required temperature may be adjustable, and controls may be provided on the control unit to allow a user to adjust the predetermined temperature.

The heat interface unit may include a central heating arrangement with a second heat exchanger with on a first side an inlet for hot water from a district heating supply, and an outlet for water to return to the district heating supply, and on a second side an outlet for water warmed by hot water from the district heating supply connecting to a central heating system, and an inlet for water returning from the central heating system.

The or each heat exchanger may be a plate heat exchanger.

A pump may be provided in the central heating arrangement to pump water through the central heating system. The pump may be located in the return path of water to the second heat exchanger.

The heat interface unit may include a hibernation configuration such that when the control unit has detected no demand for heat for a predetermined time interval from either the hot water supply arrangement or central heating arrangement, periodically a pulse of water from the district heating supply will be passed through the second heat exchanger.

The heat interface unit may be connectable to a thermostat inside the property such that when a temperature below a predetermined level is detected in the property, the unit actuates the pump and opens the control valve to a required amount.

The heat interface unit may be configured to restrict the amount of opening of the control valve on first opening.

A diverter valve may be provided downstream of the control valve to selectively divert water from the district heating supply to a one of the first or second heat exchangers.

An inlet temperature sensor connected to the control unit may be provided at or adjacent the inlet on the second side of the second heat exchanger. The heat interface unit may be configured such that the control valve is opened so as to provide a required amount of district heating supply water to pass therethrough in response to the temperature sensed by the inlet and/or outlet temperature sensors.

A pressure sensor may be provided in the central heating system and connected to the control unit, and the heat interface unit may be configured such that if the pressure sensor senses pressure below a predetermined level, the control unit will automatically turn off the pump and supply of district heating supply water to the second heat exchanger.

An external temperature sensor may be connected to the control unit to provide an indication of the temperature externally of the property, and the heat interface unit may be configured to control the central heating arrangement in response to the external temperature, and for instance the central heating arrangement may be heated up more quickly when very cold external temperatures are sensed.

The control unit may be configured to automatically detect errors in the heat interface unit and provide a respective error message. The control unit may be configured such that once the errors in the heat interface unit have been corrected, the heat interface unit will automatically be reset

The heat interface unit may be configured such that when the control unit detects no requirement for water from the district heating supply to either the hot water supply arrangement or central heating arrangement, the district heating supply is automatically connected to the second heat exchanger.

The control unit may be connectable to control units in heat interface units in other properties.

According to a second aspect of the invention there is provided a heating system for a number of properties, the system including a district heating supply, with each property having a heat interface unit according to any of the preceding eighteen paragraphs, with the control units in each heat interface unit operably interconnected.

An embodiment of the present invention will now be described by way of example only and with reference to the accompanying drawings, in which:
Fig. 1 is a schematic view of a first heat interface unit according to the invention; and
Fig. 2 is a similar view of a second heat interface unit according to the invention.

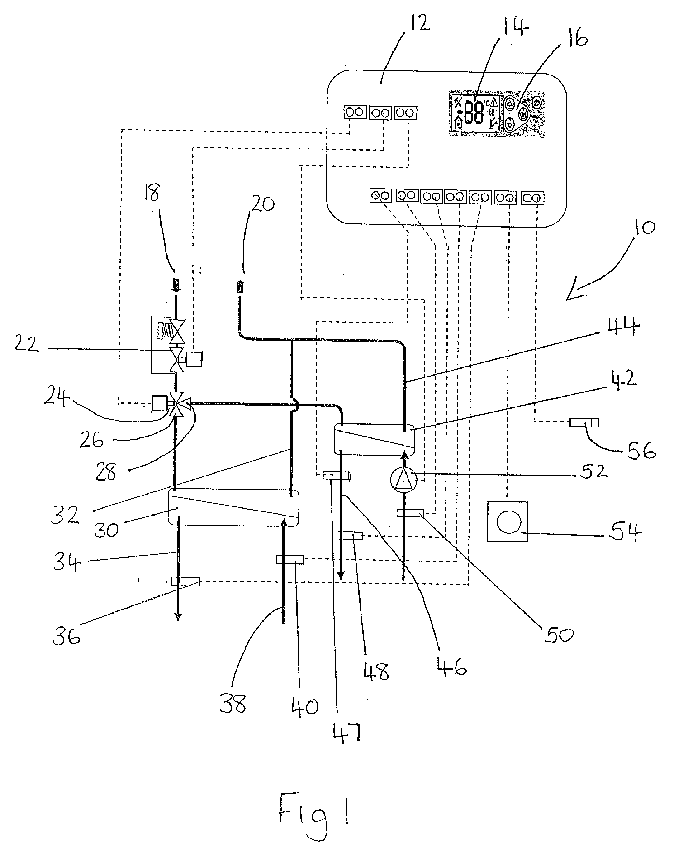

Fig. 1 shows a first heat interface unit 10 suitable for locating for instance in a flat or other property which has a common heating supply of hot water, for instance from a central boiler.

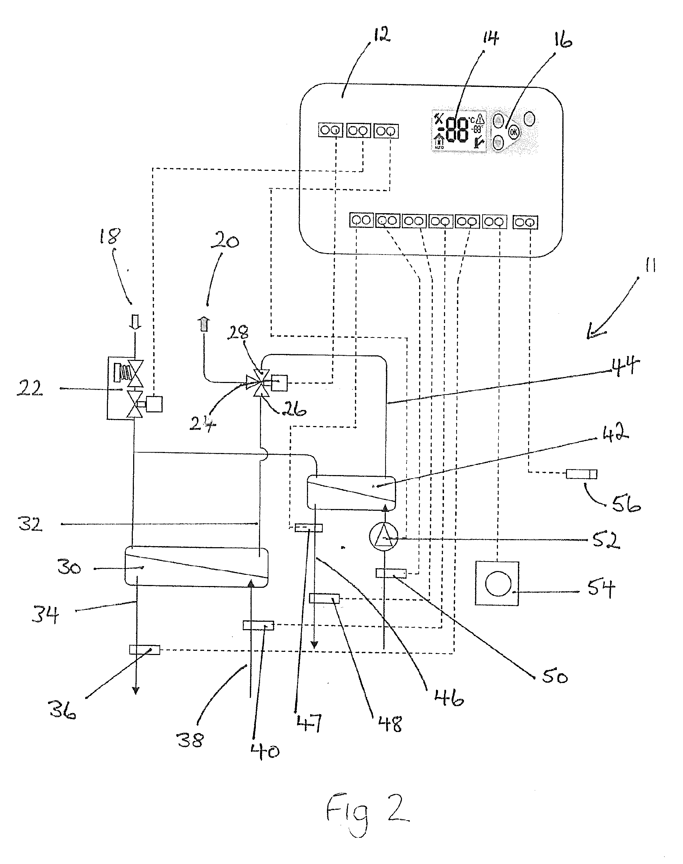

Fig. 2 shows a second heat interface unit 11 which is similar in many respects to the unit 10, and therefore similar reference numerals are used for the identical or similar components.

The units 10, 11 include a control unit 12 with proportional integral derivative control. The control unit 12 has a display screen 14 and control members 16 to permit instructions or data to be input into the unit 12. The control unit 12 is programmed with computer algorithms written into the control unit 12 firmware to control the unit 10 as described below.

An inlet 18 is provided connected to the district heating supply, and an outlet 20 returning water back to the district heat supply is also provided. Downstream of the inlet 18 a control valve 22 is provided in the form of a pressure independent control valve with an electric actuator modulating control. The control valve 22 is configured such that a required water flow can be provided, regardless of pressure fluctuations in the district heating supply on the upstream side of the control valve 22 and modulate in proportion to the demand by modulating the opening/closing of the valve and modulating the speed of the opening/closing of the valves to meet the requirement to the demand. The control valve 22 is pre-set to the parameters of the heat interface unit design output specification.

In the unit 10 downstream of the control valve 22 a diverter valve 24 is provided selectively switchable to direct water from the control valve 22 to one of either first and second outlets 26, 28. The first outlet 26 leads to a first side of a first plate heat exchanger 30, and an outlet 32 is provided at the opposite end of the heat exchanger 30 to return water to the district heating supply outlet 20.

In the unit 11 downstream of the control valve 22 a diverter valve 24 is provided selectively switchable to direct water from the control valve 22 to one of either first and second outlets 26, 28. The first inlet 26 connects from the first side of a first plate heat exchanger 30, and an inlet 32 is provided at the opposite end of the heat exchanger 30 to return water to the district heating supply outlet 20.

The first heat exchanger 30 forms part of a hot water supply arrangement with a hot water outlet 34 extending from the first heat exchanger 30 through a hot water temperature sensor 36 to connect to one or more taps, showers or other outlets in the building. A cold water mains supply 38 connects through a flow detector 40 into the opposite end of the second side of the first heat exchanger 30.

In the unit 10, the second outlet 28 from the diverter valve 24 connects to a first side of a second smaller plate heat exchanger 42. A connection 44 is provided at the opposite end of the first side of the second heat exchanger 42, to return heat exhausted primary water following cooling in the second heat exchanger 42 to the district heating supply outlet 20.

In the unit 11, the second inlet 28 to the diverter valve 24 connects to a first side (return connection) of a second smaller plate heat exchanger 42. A connection 44 is provided at the opposite end of the first side of the second heat exchanger 42, to return heated water following cooling in the second heat exchanger 42 to the district heating supply outlet 20.

An outlet 46 from the second side of the heat exchanger 42 extends via an outlet temperature sensor 47 and a pressure sensor 48, both connected to the control unit 12, to a central heating circuit. The central heating circuit returns via an inlet temperature sensor 50 and a pump 52, both connected to the control unit 12, to the opposite end of the second side of the second heat exchanger 42.

The control unit 12 is programmed such that if a pressure below a predetermined level is detected by the pressure sensor 48, operation of the central heating pump 52 will be prevented.

A room thermostat 54 is provided connected to the control unit 12. An external temperature sensor 56 is also provided as an optional function and again connected to the control unit 12. If there is a requirement for central heating which may be prompted by the room thermostat 56, the control unit 12 will switch on the pump 52 and will open the control valve 22. The diverter valve 24 will be configured to direct water through the second outlet 28. Hot water from the district heating supply will warm water flowing through the central heating circuit through the second heat exchanger 42.

The amount that the control valve 22 is opened will be determined by the control unit 12 in the light of the water temperature in the central heating circuit detected by the sensors 47 and 50, and also the amount of water pressure and temperature flow from the district heating supply.

The control unit 12 is programmed to automatically limit the amount the control valve 22 can be opened to in the first instance of demand. This provides protection from starvation of the supply of heated water from the district heating supply, as could occur for instance if a number of dwellings had a particular heating requirement at the same time, for instance first thing in the morning.

The control unit 12 will continually monitor the temperature of water in the heating system by the temperature sensors 47 and 50 and modulate the flow of district heating supply water to the second heat exchanger 42, promoting the most economical operation of the central heating in each dwelling by always maintaining the lowest possible return temperature to the outlet 20 balanced with efficient comfort heating for the home and the most fuel efficient solution.

The control unit 12 will determine whether heat is required from the central heating unit in the light of the outside climate temperature sensor sensed by the thermostat 56. In the home the thermostat 54 can be manually adjusted as is conventional.

If there is a demand for hot water this will be sensed by the flow sensor 40 which if necessary will cause the diverter valve 24 to connect to the first outlet 26, and demand for hot water will take priority over the central heating circuit. The control unit 12 will measure the amount of flow through the flow detector 40 and in the light of this actuate the control valve 22 so as to provide a predetermined required temperature for the hot water supplied to the hot water supply arrangement, and the temperature of this water will be measured by the hot water temperature sensor 36. The predetermined hot water temperature can be adjusted using the control member 16 on the control unit 12, and typically a temperature of 55°C would be used.

The control unit 12 is programmed so as to control the amount of opening of the control valve 22 to enable the required temperature to be reached very quickly and be maintained, despite for instance changes to the pressure and/or temperature of the district heating supply water.

If there is no demand for hot water or heating, the control unit 12 will have closed the control valve 22. No flow of hot water will have been detected by the flow sensor 40. The room temperature may be above that set on the room thermostat 54.

The control unit 12 is programmed such that after a set period such as 20 minutes (an adjustable setting for the installer on commissioning), a hibernation state will be entered, and then a pulse of hot water (a predetermined amount, factory set for instance at 1.6 ltrs per hour for 2 minutes) from the common heating supply will be sent through the second heat exchanger 42 to maintain an available amount of heat close to the unit 10 to enable fast response to any forthcoming demand for hot water and/or heating, and reduce water wastage. The parameters for this feature are adjustable to suit a client's particular requirement.

As indicated an external temperature sensor 56 is provided, and by virtue of the control unit algorithms 12 taking into account the external temperature, the units 10, 11 can be even more efficient. If for instance extreme temperatures are detected, more hot water can be supplied than would otherwise be the case to the second heat exchanger 42 through the control valve 22, to provide for faster heat up times.

The control unit 12 is programmed to carry out automatic fault diagnostics and provide any error messages on the screen 14. The control unit 12 is further programmed such that once such errors have been corrected the heat interface units 10, 11 will automatically be reset. The control unit algorithms are configured to manage the heat interface unit such that it can still run in case of fault or errors in one of the two major functions. For instance either of the heating or hot water arrangements can operate even in the event of a fault with the other.

The control unit 12 is configured such that if there is no hot water demand by either the hot water supply arrangement or the heating circuit, the control valve 22 will automatically switch to the second outlet 28 such that water will be connected to the second heat exchanger 42, thereby reducing the amount of scale build up in the first heat exchanger 30.

There are thus described heat interface units which provide for high volume performance delivery of hot water using large plate heat exchangers whilst monitoring very low return temperatures and providing substantial energy savings. The control unit can reduce the flow rate of district heating supply water when not required to provide the required hot water temperature or heating.

The control unit algorithms are configured to optimise the use of energy from the district heating supply and to continuously monitor the comfort state of the property, and measuring the heating return temperature. This avoids the wasting of energy, by providing an automatic adjustment of the water delivery temperature at lower value if less heating is required and vice versa.

The invention also provides a heating system for a number of dwellings or other properties such as for example a multi storey flat. In this instance the control units of each of the respective heat interface units are interconnected and programmed to exchange data and share information useful to optimise the overall functionalities of the system.

It is realised that a wide range of other variations may be made without departing from the scope of the invention. For instance the circuit in the unit may take a different form. In some instances the heat interface unit will only be required to provide hot water.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A heat interface unit (10) for a property, the heat interface unit (10) including: a hot water supply inlet (18) from a district heating supply; a return outlet (32) to the district heating supply; a control unit (12); a control valve (22) to control water flow from the district heating supply; a hot water supply arrangement including a first heat exchanger (30) with on a first side an inlet (26) for hot water from the district heating supply and an outlet (32) for water to return to the district heating supply, and on a second side an inlet for cold mains water, and an outlet (46) for water warmed by warm water from the district heating supply, leading to a hot water supply for the property.

2. A heat interface unit according to claim 1, in which the control unit has proportional integral derivative control, and may include algorithms that allow the modulation speed to also be proportional.

3. A heat interface unit according to claims 1 or 2, in which the control valve is a pressure independent control valve, and the control valve may have an electric actuator modulating control operatively connected to the control unit.

4. A heat interface unit according to any of the preceding claims, in which a flow sensor is provided in the hot water supply arrangement to detect when water is flowing therethrough and hence there is a demand for hot water, the flow sensor may be provided in the mains water supply to detect water flowing into the first heat exchanger, a temperature detector may be provided in or adjacent the outlet from the first heat exchanger, in which the flow sensor and temperature detector may be connected to the control unit, the heat interface unit may be configured such that the control valve is opened by the control unit to a required amount to provide hot water in the hot water circuit at a required predetermined temperature, the predetermined required temperature may be adjustable, and controls may be provided on the control unit to allow a user to adjust the predetermined temperature.

5. A heat interface unit according to any of the preceding claims, in which the heat interface unit includes a central heating arrangement with a second heat exchanger with on a first side an inlet for hot water from a district heating supply, and an outlet for water to return to the district heating supply, and on a second side an outlet for water warmed by hot water from the district heating supply connecting to a central heating system, and an inlet for water returning from the central heating system, the or each heat exchanger may be a plate heat exchanger, an inlet temperature sensor connected to the control unit may be provided at or adjacent the inlet on the second side of the second heat exchanger, the heat interface unit may be configured such that the control valve is opened so as to provide a required amount of district heating supply water to pass therethrough in response to the temperature sensed by the inlet and/or outlet temperature sensors.

6. A heat interface unit according to claim 5, in which a pump is provided in the central heating arrangement to pump water through the central heating system, the pump may be located in the return path of water to the second heat exchanger, and a heat interface unit may be connectable to a thermostat inside the property such that when a temperature below a predetermined level is detected in the property, the unit actuates the pump and opens the control valve to a required amount.

7. A heat interface unit according to claims 5 or 6, in which the heat interface unit includes a hibernation configuration such that when the control unit has detected no demand for heat for a predetermined time interval from either the hot water supply arrangement or central heating arrangement, periodically a pulse of water from the district heating supply will be passed through the second heat exchanger.

8. A heat interface unit according to any of the preceding claims, in which the heat interface unit is configured to restrict the amount of opening of the control valve on first opening.

9. A heat interface unit according to claim 5 or any of claims 6 to 8 when dependent on claim 5, in which a diverter valve is provided downstream of the control valve to selectively divert water from the district heating supply to a one of the first or second heat exchangers.

10. A heat interface unit according to claim 5 or any of claims 6 to 9 when dependent on claim 5, in which a pressure sensor is provided in the central heating system and connected to the control unit, and the heat interface unit may be configured such that if the pressure sensor senses pressure below a predetermined level, the control unit will automatically turn off the pump and supply of district heating supply water to the second heat exchanger.

11. A heat interface unit according to any of the preceding claims, in which an external temperature sensor is connected to the control unit to provide an indication of the temperature externally of the property, and the heat interface unit may be configured to control the central heating arrangement in response to the external temperature, and for instance the central heating arrangement may be heated up more quickly when very cold external temperatures are sensed.

12. A heat interface unit according to any of the preceding claims, in which the control unit is configured to automatically detect errors in the heat interface unit and provide a respective error message, and the control unit may be configured such that once the errors in the heat interface unit have been corrected, the heat interface unit will automatically be reset

13. A heat interface unit according to any of the preceding claims, in which the heat interface unit is configured such that when the control unit detects no requirement for water from the district heating supply to either the hot water supply arrangement or central heating arrangement, the district heating supply is automatically connected to the second heat exchanger.

14. A heat interface unit according to any of the preceding claims, in which the control unit is connectable to control units in heat interface units in other properties.

15. A heating system for a number of properties, the system including a district heating supply, with each property having a heat interface unit according to any of the preceding claims, with the control units in each heat interface unit operably interconnected.
